# EUROPEAN PATENT APPLICATION

(11) **EP 4 640 458 A1**
(43) Date of publication of application: **29.10.2025**
(21) Application number: 24752917.5
(22) Date of filing: 08.02.2024
(51) Int. Cl.: B60J 1/20, B60R 13/04

(54) **VEHICLE WINDOW ASSEMBLY AND VEHICLE**

(30) Priority: 09.02.2023 CN 202310090133
(71) Applicant: Fuyao Glass Industry Group Co., Ltd., Fuqing, Fujian 350300 (CN)
(72) Inventor: LI, Yuzhou, Fuzhou, Fujian 350300 (CN); WANG, Lei, Fuzhou, Fujian 350300 (CN); QIU, Wuhua, Fuzhou, Fujian 350300 (CN); JIANG, Lixing, Fuzhou, Fujian 350300 (CN); ZHAN, Maorong, Fuzhou, Fujian 350300 (CN)
(74) Representative: Mewburn Ellis LLP
(86) International application number: PCT/CN2024/076856
(87) International publication number: WO 2024/165063

(57) **Abstract**

A vehicle window assembly (1000) and a vehicle are provided. The vehicle window assembly includes a vehicle window glass (100) and an exterior trim panel assembly (200). The exterior trim panel assembly includes a substrate (210) and at least one first structural member (230), the substrate is connected to an edge of the vehicle window glass, and the substrate has an outer surface (211) facing an outside of a vehicle. The first structural member is connected to the outer surface of the substrate, and at least part of the first structural member is arranged to protrude or recess relative to the substrate. Optical properties of the substrate differ from optical properties of the first structural member, and the optical properties include object color, glossiness, light refraction, and light absorption. The vehicle window assembly can improve the aesthetic appearance of the exterior trim panel assembly, making the styling of the exterior trim panel assembly more three-dimensional and color-rich.

## Description

This application claims priority to Chinese Patent Application No. 202310090133.1, filed February 9, 2023, and entitled "VEHICLE WINDOW ASSEMBLY AND VEHICLE", the entire disclosure of which is incorporated herein by reference.

### TECHNICAL FIELD

The present disclosure relates to the field of vehicle technology, and in particular, to a vehicle window assembly and a vehicle.

### BACKGROUND

As users' requirements for vehicle appearance become increasingly high, there is a growing demand for styling design of exterior trim panels around vehicle windows. Making the exterior trim panels more three-dimensional can enhance user experience. Currently, trim panels at the edges of vehicle window glass have poor appearance effects and are difficult to flexibly adapt to application requirements in multiple scenarios.

### SUMMARY

Embodiments of the disclosure provide a window assembly and a vehicle, which can improve the aesthetic appearance of an exterior trim panel assembly, making the styling of the exterior trim panel assembly more three-dimensional and color-rich.

In a first aspect, the disclosure provides a vehicle window assembly. The vehicle window assembly includes a vehicle window glass and an exterior trim panel assembly, where the exterior trim panel assembly includes a substrate and at least one first structural member. The substrate is connected to an edge of the vehicle window glass, and the substrate has an outer surface facing an outside of a vehicle. The first structural member is connected to the outer surface of the substrate, and at least part of the first structural member is arranged to protrude or recess relative to the substrate, where optical properties of the substrate differ from optical properties of the first structural member. The optical properties include object color, glossiness, light refraction, and light absorption.

It may be understood that, the first structural member protruding relative to the substrate can make the appearance surface of the exterior trim panel assembly more three-dimensional. Moreover, the first structural member and the substrate having different optical properties can enrich the visual effects of the appearance of the exterior trim panel assembly. As the first structural member is an independent component, the first structural member may be colored through electroplating or baking finish before being installed on the substrate. This solves the problem in the prior art where oversized exterior trim panel assemblies are difficult to process, making it impossible to provide appearance surfaces with areas of different optical properties.

Additionally, since the first structural member protrudes relative to the substrate, the structural strength of a trim assembly may be enhanced. When the trim assembly is subjected to force, the protruding portion can bear the impact first, preventing damage of the substrate due to direct impact.

In a possible embodiment, the first structural member is implemented as multiple first structural members, and optical properties of the multiple first structural members are identical or different.

It may be understood that, the appearance of the first structural member and the appearance of the substrate having identical optical properties can create a more integrated color design for the exterior trim panel assembly. The appearance of the first structural member and the appearance of the substrate having different optical properties can make the overall appearance of the exterior trim panel assembly more diverse. Different first structural members with varied optical properties may be selected according to different usage scenarios.

In a possible embodiment, the exterior trim panel assembly further includes at least one second structural member. One second structural member is connected to one side of one first structural member away from the substrate, and optical properties of the second structural member differ from the optical properties of the first structural member.

It may be understood that, the first structural member and the second structural member having different optical properties can enrich the appearance of the exterior trim panel assembly. This enables the exterior trim panel to not only possess a three-dimensional structure but also exhibit multiple colors and multi-layered configurations, thereby enhancing the aesthetic appearance of the exterior trim panel.

In a possible embodiment, the substrate defines a first groove at the outer surface of the substrate. The first structural member is connected to the first groove, a portion of the first structural member is located in the first groove, and another portion of the first structural member protrudes relative to the substrate.

It may be understood that, the arrangement of the first groove allows partial structure of the first structural member to be embedded into the first substrate, thereby enabling the first structural member to be connected to the substrate more tightly while achieving a more concise and integrated appearance of the first structural member and the substrate.

In a possible embodiment, the exterior trim panel assembly further includes a spacer disposed between the first structural member and the substrate, and one end of the spacer is connected to the substrate and another end of the spacer is connected to the first structural member.

It may be understood that, the spacer can maintain a certain interval between the first structural member and the substrate, making the first structural member protrude more prominently relative to the substrate. This enhances the three-dimensional effect of the exterior trim panel assembly and improves the aesthetic appearance of the exterior trim panel assembly.

In a possible embodiment, a height of the spacer ranges from 1.0mm to 1.5mm.

In a possible embodiment, the first groove has a first groove bottom wall, and the first groove is provided with a first limiting portion at the first groove bottom wall. The first structural member is provided with a second limiting portion, and the first limiting portion cooperates with the second limiting portion to limit movement of the first structural member relative to the substrate.

In a possible embodiment, the first groove has a first groove side wall surrounding the first structural member and spaced apart from the first structural member, and a distance between the first groove side wall and the first structural member ranges from 0.3mm to 0.8mm.

In a possible embodiment, the first structural member defines a second groove at a surface of the first structural member away from the substrate. The second structural member is located in the second groove, and one side of the second structural member facing outside the vehicle is flush with one side of the first structural member facing outside the vehicle.

In a possible embodiment, the exterior trim panel assembly further includes a connecting member. The second groove has a second groove bottom wall and a second groove side wall disposed around a periphery of the second groove bottom wall, and the second structural member is spaced apart from the second groove bottom wall with a gap. The second groove side wall is arranged around a periphery of the second structural member and spaced apart from the second structural member.

In a possible embodiment, a distance between the second structural member and the second groove bottom wall ranges from 1.0mm to 1.5mm.

In a possible embodiment, a distance between the second structural member and the second groove side wall ranges from 0.3mm to 0.8mm.

In a second aspect, the disclosure provides a vehicle including a vehicle body and the vehicle window assembly described above. The vehicle window assembly is connected to the vehicle body.

### BRIEF DESCRIPTION OF THE DRAWINGS

In order to describe technical solutions of embodiments of the disclosure more clearly, the following will give a brief introduction to the accompanying drawings used for describing the embodiments. Apparently, the accompanying drawings hereinafter described are some embodiments of the present disclosure. Based on these drawings, those of ordinary skill in the art can also obtain other drawings without creative effort.
FIG. 1 is a schematic structural view of a vehicle window assembly provided in an embodiment of the disclosure.
FIG. 2 is a schematic cross-sectional view of an exterior trim panel assembly illustrated in FIG. 1.
FIG. 3 is a partially enlarged schematic cross-sectional view of a first type of exterior trim panel assembly illustrated in FIG. 1.
FIG. 4 is a partially enlarged schematic cross-sectional view of a second type of exterior trim panel assembly illustrated in FIG. 1.
FIG. 5 is a partially enlarged schematic cross-sectional view of a third type of exterior trim panel assembly illustrated in FIG. 1.
FIG. 6 is a schematic view of an exterior trim panel assembly illustrated in FIG. 3, with gaps being marked out.
FIG. 7 is a schematic view of another exterior trim panel assembly illustrated in FIG. 5, with gaps being marked out.
FIG. 8 is a partially enlarged schematic cross-sectional view of a fourth type of exterior trim panel assembly illustrated in FIG. 1.
FIG. 9 is a partially enlarged schematic cross-sectional view of a fifth type of exterior trim panel assembly illustrated in FIG. 1.
FIG. 10 is a partially enlarged schematic cross-sectional view of a sixth type of exterior trim panel assembly illustrated in FIG. 1.

### DETAILED DESCRIPTION

For ease of understanding, terms involved in embodiments of the present disclosure are first explained.

"And/or" is only an association relationship for describing associated objects and represents that three relationships may exist. For example, A and/or B may represent the following three cases: A exists only, both A and B exist, and B exists only.

"Multiple" means two or more than two.

"Connect" should be understood in a broader sense. For example, "A is connected to B" may mean that A and B are in a direct connection or in an indirect connection through a medium.

The following will clearly describe specific embodiments of the disclosure with reference to the accompanying drawings.

As users' requirements for vehicle appearance become increasingly high, there is a growing demand for styling design of exterior trim panels around vehicle windows. Making the exterior trim panels more three-dimensional can enhance user experience. Currently, trim panels at the edges of vehicle window glass have poor appearance effects and are difficult to flexibly adapt to application requirements in multiple scenarios.

Based on this, embodiments of the disclosure provide a vehicle window assembly and a vehicle, which can improve the aesthetic appearance of the exterior trim panel assembly, making the styling of the exterior trim panel assembly more three-dimensional and color-rich.

A vehicle includes a vehicle body and a vehicle window assembly, and the vehicle window assembly is connected to the vehicle body. The vehicle window assembly may be disposed as a side window or a sunroof of the vehicle, etc. The disclosure does not specifically limit the position of the vehicle window assembly.

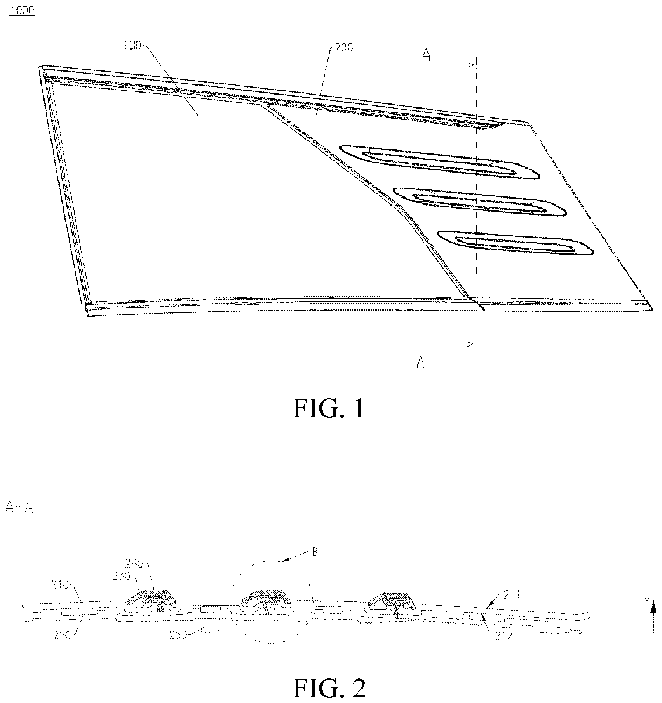

Reference is made to FIG. 1, which is a schematic structural view of a vehicle window assembly 1000 provided in an embodiment of the disclosure. The vehicle window assembly 1000 includes a vehicle window glass 100 and an exterior trim panel assembly 200. Reference is made to FIG. 2, which is a schematic cross-sectional view of an exterior trim panel assembly 200 illustrated in FIG. 1. The exterior trim panel assembly 200 may include a substrate 210, a reinforcement panel 220, at least one first structural member 230, and at least one second structural member 240.

It may be noted that, FIG. 1 only provides a schematic description of the connection relationship between the vehicle window glass 100 and the exterior trim panel assembly 200, and is not intended to specifically limit the connection positions, specific structures, and quantities of each device. The structure illustrated in embodiments of the disclosure does not constitute a specific limitation on the vehicle window assembly 1000. In some other embodiments of the disclosure, the vehicle window assembly 1000 may include more or fewer components than those illustrated in FIG. 1, or combine some components, or split some components, or have different component arrangements. The components illustrated in the figure may be implemented by hardware, software, or a combination of software and hardware.

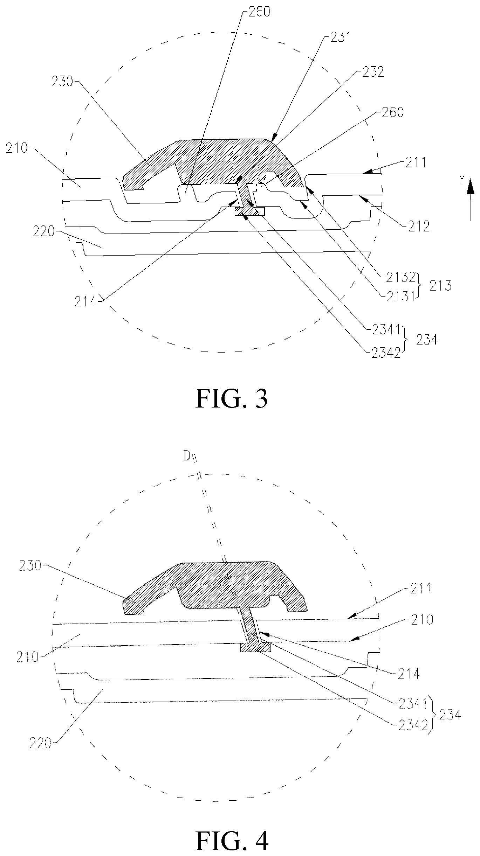

The substrate 210 is connected to a periphery of the vehicle window glass 100. Reference is made to FIG. 3, which is a partially enlarged schematic cross-sectional view of a first type of exterior trim panel assembly 200 illustrated in FIG. 1. The substrate 210 has an outer surface 211 and an inner surface 212 arranged opposite to each other. The outer surface 211 faces the outside of the vehicle, and the inner surface 212 faces the inside of the vehicle. The object color of the outer surface 211 may be a first color. The substrate 210 may define a first groove 213, and the first groove 213 is formed by recessing from the outer surface 211 of the substrate 210. The first groove 213 has a first groove bottom wall 2131 and a first groove side wall 2132. The first groove side wall 2132 surrounds the first groove bottom wall 2131 and extends from the periphery of the first groove bottom wall 2131. The first groove side wall 2132 may be inclined, which means that the first groove side wall 2132 forms an angle with a thickness direction of the exterior trim panel assembly 200. The first groove bottom wall 2131 is provided with a first limiting portion 214. Exemplarily, the first limiting portion 214 may be a through hole, a blind hole, a protrusion, etc. The disclosure does not specifically limit the structure of the first limiting portion 214.

It may be understood that, the arrangement of the first groove 213 allows partial structure of the first structural member 230 to be embedded into the first substrate 210, thereby enabling the first structural member 230 to be connected to the substrate 210 more tightly while achieving a more concise and integrated appearance of the first structural member 230 and the substrate 210. The inclined arrangement of the first groove side wall 2132 allows the first structural member 230 to conceal and hide the first groove bottom wall 2131 after the first structural member 230 is connected to the substrate 210, thereby achieving a more concise appearance of the exterior trim panel assembly 200.

Reference is made to FIG. 4, which is a partially enlarged schematic cross-sectional view of a second type of exterior trim panel assembly 200 illustrated in FIG. 1. It may be noted that, the substrate 210 may not define the first groove 213, and the first structural member 230 is directly connected to one side of the outer surface 211 of the substrate 210.

The reinforcement panel 220 and the substrate 210 are stacked, and the reinforcement panel 220 is disposed on one side of the inner surface 212 of the substrate 210. The reinforcement panel is configured to enhance the structural strength of the exterior trim panel assembly 200, thereby enabling the exterior trim panel assembly 200 to have certain impact resistance.

Reference is again made to FIG. 2. Exemplarily, the exterior trim panel assembly 200 may further include a fastening member 250. The reinforcement panel 220 is connected to the substrate 210 via the fastening member 250. The fastening member 250 may be a screw or an adhesive, etc. The reinforcement panel 220 may further include a first limiting structure (not shown in the figures), and the substrate 210 may further include a second limiting structure (not shown in the figures). The first limiting structure and second limiting structure are mutually limited, such that the reinforcement panel 220 is connected to the substrate 210. The first limiting structure and second limiting structure may be a slot and a protrusion, respectively, and the slot and the protrusion are engaged with each other to provide limiting, such that the reinforcement panel 220 is connected to the substrate 210. The disclosure does not limit the specific connection method of the reinforcement panel 220 and the substrate 210, and the reinforcement panel 220 and the substrate 210 may be fixedly connected through other commonly used methods.

Reference is again made to FIG. 3, the first structural member 230 is connected to the outer surface 211 of the substrate 210, and the first structural member 230 protrudes relative to the substrate 210. The first structural member 230 may have an appearance surface 231 and a connection surface 232 arranged opposite to each other. The appearance surface 231 faces the outside of the vehicle and serves as a part of the appearance surface of the exterior trim panel assembly 200. The appearance surface 231 may be arc-shaped, and the connection surface 232 is at one side of the first structural member 230 facing the substrate 210. The appearance surface 231 may be a convex surface, and edges of the appearance surface 231 are flush with the outer surface 211 of the substrate 210, thereby achieving a more concise and integrated appearance of the first structural member 230 and the substrate 210.

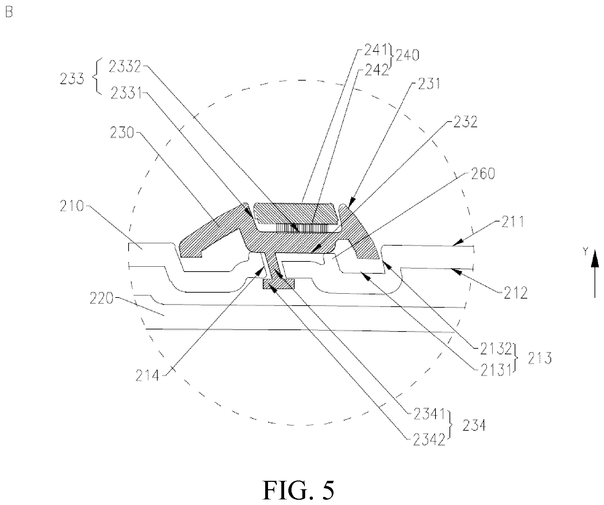

Reference is made to FIG. 5, which is a partially enlarged schematic cross-sectional view of a third type of exterior trim panel assembly 200 illustrated in FIG. 1. The thickness direction of the exterior trim panel assembly 200 is the direction indicated by the Y-axis in the figure. In a possible embodiment, the first structural member 230 may define a second groove 233, and the second groove 233 is formed by recessing from the appearance surface 231 of the first structural member 230. The second groove 233 has a second groove bottom wall 2331 and a second groove side wall 2332. The second groove side wall 2332 is disposed around a periphery of the second groove bottom wall 2331, and the second groove side wall 2332 is connected to the periphery of the second groove bottom wall 2331. The second groove side wall 2332 may be inclined, which means that the second groove side wall 2332 forms an angle with the thickness direction of the exterior trim panel assembly 200.

It may be understood that, the inclined arrangement of the second groove side wall 2332 allows the second structural member 240 to conceal and hide the second groove bottom wall 2331 after the second structural member 240 is connected to the first structural member 230, thereby achieving a more concise appearance of the exterior trim panel assembly 200.

Reference is again made to FIG. 3. It may be noted that, the first structural member 230 may not define the second groove 233, and the second structural member 240 may be directly connected to one side of the first structural member 230 away from the substrate 210.

The optical properties of the appearance surface of the first structural member 230 differ from the optical properties of the appearance surface (outer surface 211) of the substrate 210. The optical properties include object color, glossiness, light refraction, and/or light absorption. The object color refers to the color of light reflected or transmitted by an object. The glossiness is a physical quantity that evaluates the ability of an object surface to reflect light, which can be used to measure the specular reflection capability of the object surface. The property of light passing through an object and continuing to propagate is called refraction. Refraction is essentially light transmission, where a regular shift of the transmission direction occurs at the object surface after the light passes through the object surface. During light transmission, the object selectively absorbs energy from specific wavelengths, which is referred to as light absorption.

The object color of the appearance surface 231 of the first structural member 230 may be a second color, and the second color is different from the first color. The second color may be applied to the appearance surface 231 of the first structural member 230 through electroplating or baking finish.

It may be understood that, the first structural member 230 protruding relative to the substrate 210 can make the appearance surface of the exterior trim panel assembly 200 more three-dimensional. Moreover, the first structural member 230 and the substrate 210 having different optical properties can enrich the morphology of the appearance surface of the exterior trim panel assembly 200. As the first structural member 230 is an independent component, the first structural member 230 may be colored through electroplating or baking finish before being installed on the substrate 210. This solves the problem in the prior art that oversized exterior trim panel assemblies 200 are difficult to process, making it impossible to provide areas of different optical properties.

Reference is again made to FIG. 4. In a possible embodiment, the substrate 210 may also be plate-shaped. That is, the substrate 210 does not define the first groove 213, and the exterior trim panel assembly 200 does not include the second structural member 240. The first structural member 230 is directly connected to the outer surface 211 of the substrate 210. The substrate 210 may include the first limiting portion 214, and the first structural member 230 may include a second limiting portion 234. The first limiting portion 214 and the second limiting portion 234 cooperatively limit the movement of the first structural member relative to the substrate, ensuring a stable connection between the substrate 210 and the first structural member 230. Exemplarily, the first limiting portion 214 may be a through hole, and the second limiting portion 234 may be a heat stake. The heat stake includes a columnar portion 2341 and an abutting portion 2342. The columnar portion 2341 extends from the connection surface 232, and the abutting portion 2342 is connected to one end of the columnar portion 2341 away from the connection surface 232. The heat stake passes through the through hole, and one end of the heat stake away from the main portion is thermally deformed to form the abutting portion 2342. The diameter of the abutting portion 2342 is greater than the diameter of the through hole, so that the heat stake abuts against an inner surface 212 of the substrate 210. The distance range *D* between the heat stake and the hole wall of the through hole may be from 0.5mm to 1.0mm.

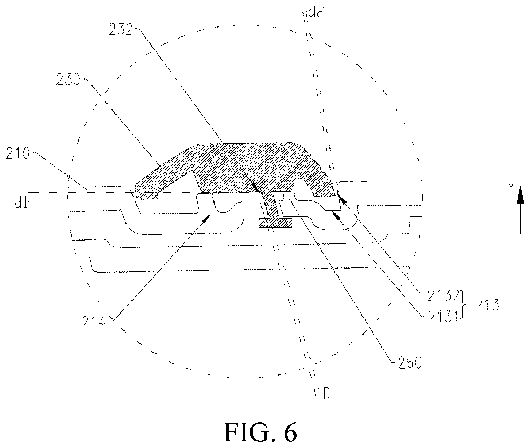

Reference is jointly made to FIG. 3 and FIG. 6. FIG. 6 is a schematic view of an exterior trim panel assembly 200 illustrated in FIG. 3, with gaps being marked out. In another possible embodiment, the first structural member 230 may be partially located in the first groove 213 described above, and another portion of the first structural member protrudes relative to the substrate, which is different from the above embodiment. Specifically, the first structural member 230 is connected to the first groove bottom wall 2131 of the first groove 213. The second limiting portion 234 and first limiting portion 214 are mutually limited, such that the first structural member 230 is connected to the substrate 210. The first groove side wall 2132 surrounds the first structural member 230, and the first groove side wall 2132 is spaced apart from the structural member by a second preset distance d2, where the second preset distance d2 ranges from 0.3mm to 0.8mm.

Exemplarily, the exterior trim panel assembly 200 may further include connection structures such as an adhesive or a screw. The first structural member 230 may also be connected to the substrate 210 via connection structures such as an adhesive or a screw. The disclosure does not specifically limit the connection method between the first structural member 230 and substrate 210.

As illustrated in FIG. 3, the exterior trim panel assembly 200 may further include a spacer 260 disposed between the first structural member 230 and substrate 210, such that the connection surface 232 of the first structural member 230 is spaced apart from the groove bottom wall by a first preset distance d1. The first preset distance d1 may range from 1.0mm to 1.5mm. The first preset distance d1 corresponds to the height of the spacer 260, and the height direction of the spacer 260 is the thickness direction of the exterior trim panel assembly 200. Exemplarily, two spacers 260 may be disposed between one first structural member 230 and the substrate 210. The disclosure does not specifically limit the number of spacers 260 between a one first structural member 230 and the substrate 210.

It may be understood that, the spacer 260 can maintain a certain interval between the first structural member 230 and the substrate 210, making the first structural member 230 protrude more prominently relative to the substrate 210. This enhances the three-dimensional effect of the exterior trim panel assembly 200 and improves the aesthetic appearance of the exterior trim panel assembly 200. By arranging two spacers 260 between the first structural member 230 and the substrate 210, two abutment positions are provided between the first structural member 230 and the substrate 210, which stabilizes the relative positioning of the first structural member 230 and the substrate 210, such that the first structural member 230 will not easily wobble relative to the substrate 210.

In a possible embodiment, the spacer 260 may be connected to the substrate 210. In an embodiment where the substrate 210 does not define the first groove 213, the spacer 260 may protrude relative to the outer surface 211 of the substrate 210. In an embodiment where the substrate 210 defines the first groove 213, the spacer 260 may also be connected to the first groove bottom wall 2131 of the first groove 213, and protrude relative to the first groove bottom wall 2131.

In another possible embodiment, the spacer 260 may be connected to the connection surface 232 of the first structural member 230, and protrude relative to the connection surface 232. It may be noted that, the disclosure does not specifically limit the connection method or formation method of the spacer 260.

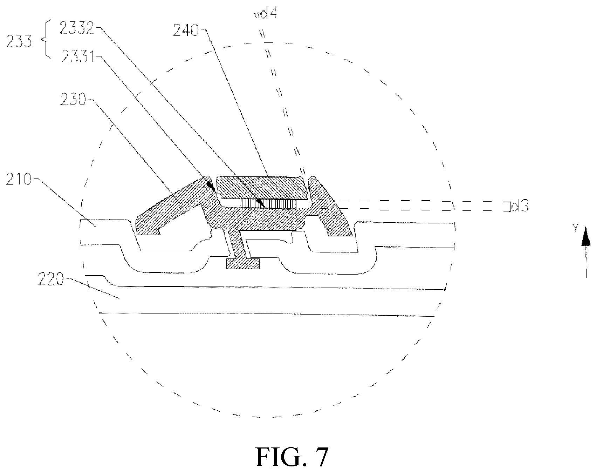

Reference is again made to FIG. 5. The second structural member 240 may be connected to one side of the first structural member 230 facing the outside of the vehicle. The second structural member 240 may be connected to the first structural member 230 via an adhesive, with a gap between the second structural member 240 and the first structural member 230. Exemplarily, the second structural member 240 may be plate-shaped. The second structural member 240 includes an appearance surface 241 and a connection surface 242. Reference is jointly made to FIG. 5 and FIG. 7, and FIG. 7 is a schematic view of another exterior trim panel assembly 200 illustrated in FIG. 5, with gaps being marked out. In a possible embodiment, the second structural member 240 may be connected to the second groove 233. The connection surface 232 of the second structural member 240 is connected to the second groove bottom wall 2331. The second groove side wall 2332 surrounds the periphery of the second structural member 240 and is spaced apart from the second structural member. The second structural member 240 is spaced apart from the second groove bottom wall 2331 by a third preset distance d3, and the third preset distance d3 ranges from 1.0mm to 1.5mm. The second structural member 240 is spaced apart from the second groove side wall 2332 by a fourth preset distance d4, and the fourth preset distance d4 ranges from 0.3mm to 0.8mm. Exemplarily, one side of the second structural member 240 facing the outside of the vehicle may be flush with one side of the first structural member 230 facing the outside of the vehicle. That is, the appearance surface 241 of the second structural member 240 away from the first structural member 230 may be a plane, and is flush with the opening of the second groove 233 on the first structural member 230.

In another possible embodiment, the first structural member 230 does not define the second groove 233, and the second structural member 240 is connected to the appearance surface 231 of the first structural member 230, which is different from the above embodiment. The appearance surface 241 of the second structural member 240 protrudes relative to the appearance surface 231 of the first structural member 230. The distance between one end of the second structural member 240 facing the first structural member 230 and the appearance surface 231 of the first structural member 230 is a third preset distance d3, and the third preset distance d3 ranges from 1.0mm to 1.5mm.

It may be understood that, the second structural member 240 protruding relative to the first structural member 230 can enhances the three-dimensional appearance of the exterior trim panel assembly 200, such that the exterior trim panel assembly 200 possesses a multi-layered structure, thereby improving the visual distinctiveness of the exterior trim panel assembly 200.

In the disclosure, the object color of the second structural member 240 may be a third color. The third color of the second structural member 240 may differ from the second color of the first structural member 230, while the third color of the second structural member 240 may be the same as the first color of the substrate 210. The color of the second structural member 240 may be formed through processing methods such as electroplating or baking finish, and the processing method of the second structural member 240 may differ from the method of the first structural member 230. Exemplarily, the second color and the third color may be respectively formed by electroplating and baking finish. Exemplarily, the first color of the substrate 210 may be gloss black, the second color of the first structural member 230 may be silver, and the third color of the second structural member 240 may be the same as the first color of the substrate 210.

It may be understood that, the first structural member 230 and the second structural member 240 having different colors can enrich the color of the exterior trim panel assembly 200. This enables the exterior trim panel assembly 200 to not only possess a three-dimensional structure but also exhibit multiple colors and multi-layered configurations, thereby enhancing the aesthetic appearance of the exterior trim panel. The second structural member 240 and the substrate 210 having the same appearance color can create a more harmonious color design for the exterior trim panel.

Additionally, since the first structural member 230 and the second structural member 240 protrude relative to the substrate 210, the structural strength of a trim assembly can be enhanced. When the trim assembly is subjected to force, the protruding portion can bear the impact first, preventing damage of the substrate 210 due to direct impact.

Furthermore, as the coloring methods for the first structural member 230 and the second structural member 240 are different, the glossiness of the surface of the first structural member 230 and the glossiness of the surface of the second structural member 240 are different, which further enhances the visual diversity of the exterior trim panel assembly 200 and optimizes the appearance of the exterior trim panel assembly 200.

In the disclosure, the first structural member 230 and/or the second structural member 240 may also be made of light-transmitting materials. The light refraction capabilities and light absorption capabilities may differ among multiple first structural members 230, and the light refraction capabilities and light absorption capabilities may differ among multiple second structural members 240. The light refraction capabilities and light absorption capabilities of the first structural member 230 may also be different from the light refraction capabilities and light absorption capabilities of the second structural member 240.

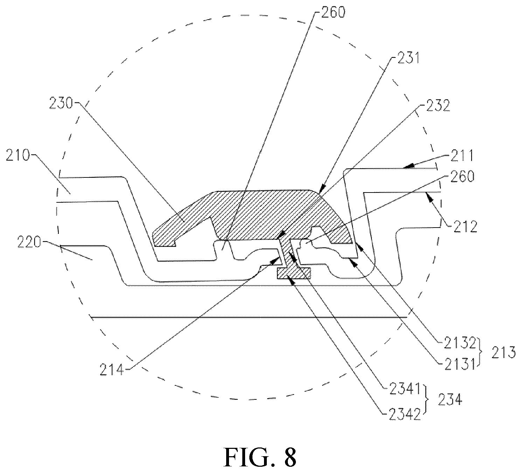

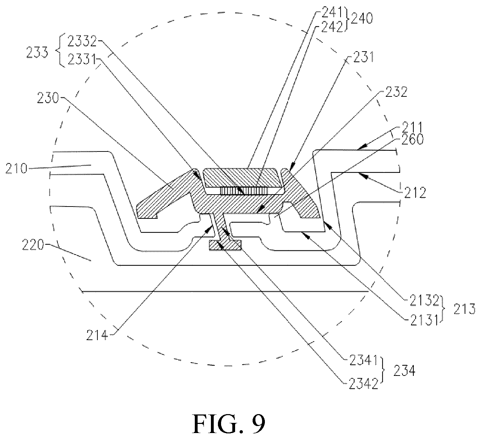

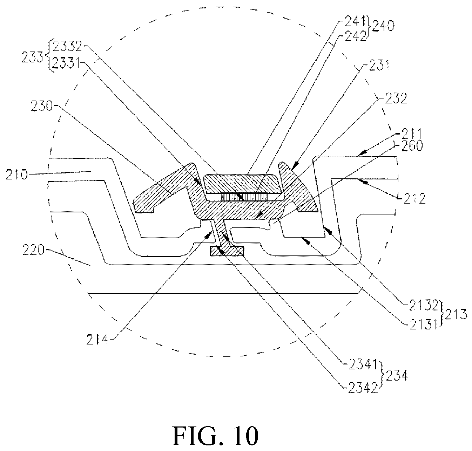

In some other embodiments, the first structural member 230 and/or the second structural member 240 may be recessed relative to the substrate 210. Specifically, reference is made to FIG. 8, which is a partially enlarged schematic cross-sectional view of a fourth type of exterior trim panel assembly 200 illustrated in FIG. 1. The first structural member 230 may be disposed inside the first groove of the substrate 210, and the first structural member 230 is recessed relative to the substrate 210. Alternatively, reference is made to FIG. 9, which is a partially enlarged schematic cross-sectional view of a fifth type of exterior trim panel assembly illustrated in FIG. 1. The second structural member 240 may be connected to one side of the first structural member 230 away from the substrate 210, and the second structural member 240 may be flush with the first structural member 230. The second structural member 240 is also recessed relative to the substrate. Specifically, the appearance surface 241 on one side of the second structural member 240 away from the first structural member 230 may be planar and flush with the opening of the second groove 233 on the first structural member 230. Alternatively, reference is made to FIG. 10, which is a partially enlarged schematic cross-sectional view of a sixth type of exterior trim panel assembly illustrated in FIG. 1. Different from FIG. 9, the second structural member 240 may be recessed relative to the first structural member 230, and the appearance surface 241 of the second structural member 240 is recessed relative to the appearance surface 231 of the first structural member 230.

It may be understood that, the first structural member 230 and/or second structural member 240 being recessed relative to the substrate 210 can make the originally planar appearance surface of the exterior trim panel assembly more three-dimensional, such that the exterior trim panel assembly 200 possesses a multi-layered structure, thereby enhancing the visual distinctiveness of the exterior trim panel assembly 200.

It may be noted that, in the disclosure, there may be multiple first structural members 230, and the multiple structural members are connected to the outer surface 211 of the substrate 210 spaced apart from each other. The multiple first structural members may have identical or different optical properties. The multiple first structural members 230 may have different second colors. There may be multiple second structural members 240, and the multiple second structural members 240 may be respectively disposed on the sides of multiple first structural members 230 away from the substrate 210. The quantities of the first structural members 230 and the second structural members 240 may be configured according to practical requirements, and the disclosure does not limit the quantities of the first structural member 230 and the second structural member 240. Exemplarily, reference is again made to FIG. 2. There may be three first structural members 230, and the three first structural members 230 may be disposed on the outer surface 211 of the substrate 210 spaced apart from each other. There may be three second structural members 240, and the three second structural members 240 may be separately disposed on the sides of the three first structural members 230 away from the substrate 210. Both the first structural member 230 and second structural member 240 may be strip-shaped, with the length direction extending along the outer surface 211 of the substrate 210.

Detailed description is made above to the embodiments of the disclosure. Detailed examples are applied to illustrate the principles and embodiments of the disclosure. The descriptions of the above embodiments are only used to help understand the methods and core ideas of the disclosure. Meanwhile, based on the idea of the disclosure, those of ordinary skills in the art may make some changes in embodiments and the scope of the disclosure. In conclusion, the contents of this specification should not be construed as limitations of the disclosure.

## Claims

1. A vehicle window assembly, comprising a vehicle window glass and an exterior trim panel assembly, wherein the exterior trim panel assembly comprises a substrate and at least one first structural member, the substrate is connected to an edge of the vehicle window glass, and the substrate has an outer surface facing an outside of a vehicle; the first structural member is connected to the outer surface of the substrate, and at least part of the first structural member is arranged to protrude or recess relative to the substrate, wherein optical properties of the substrate differ from optical properties of the first structural member, the optical properties comprise object color, glossiness, light refraction, and/or light absorption.

2. The vehicle window assembly of claim 1, wherein the first structural member is implemented as a plurality of first structural members, and optical properties of the plurality of first structural members are identical or different.

3. The vehicle window assembly of claim 1 or 2, wherein the exterior trim panel assembly further comprises at least one second structural member, one second structural member is connected to one side of one first structural member away from the substrate, and optical properties of the second structural member differ from the optical properties of the first structural member.

4. The vehicle window assembly of claim 1, wherein the substrate defines a first groove at the outer surface of the substrate, the first structural member is connected to the first groove, a portion of the first structural member is located in the first groove, and another portion of the first structural member protrudes relative to the substrate.

5. The vehicle window assembly of claim 1, wherein the exterior trim panel assembly further comprises a spacer disposed between the first structural member and the substrate, and one end of the spacer is connected to the substrate and another end of the spacer is connected to the first structural member.

6. The vehicle window assembly of claim 5, wherein a height of the spacer ranges from 1.0mm to 1.5mm.

7. The vehicle window assembly of claim 4, wherein the first groove has a first groove bottom wall, the first groove is provided with a first limiting portion at the first groove bottom wall, the first structural member is provided with a second limiting portion, and the first limiting portion cooperates with the second limiting portion to limit movement of the first structural member relative to the substrate.

8. The vehicle window assembly of claim 4 or 7, wherein the first groove has a first groove side wall surrounding the first structural member and spaced apart from the first structural member, and a distance between the first groove side wall and the first structural member ranges from 0.3mm to 0.8mm.

9. The vehicle window assembly of claim 3, wherein the first structural member defines a second groove at a surface of the first structural member away from the substrate, the second structural member is located in the second groove, and one side of the second structural member facing the outside of the vehicle is flush with one side of the first structural member facing the outside of the vehicle.

10. The vehicle window assembly of claim 9, wherein the exterior trim panel assembly further comprises a connecting member, the second groove has a second groove bottom wall and a second groove side wall disposed around a periphery of the second groove bottom wall, the second structural member is spaced apart from the second groove bottom wall with a gap, the second groove side wall is arranged around a periphery of the second structural member and spaced apart from the second structural member.

11. The vehicle window assembly of claim 10, wherein a distance between the second structural member and the second groove bottom wall ranges from 1.0mm to 1.5mm.

12. The vehicle window assembly of claim 10, wherein a distance between the second structural member and the second groove side wall ranges from 0.3mm to 0.8mm.

13. A vehicle, comprising a vehicle body and the vehicle window assembly of any one of claims 1 to 12, wherein the vehicle window assembly is connected to the vehicle body.
